# EUROPEAN PATENT APPLICATION

(11) **EP 2 464 128 A2**
(43) Date of publication of application: **13.06.2012**
(21) Application number: 11191694.6
(22) Date of filing: 02.12.2011
(51) Int. Cl.: H04N 13/02

(54) **Stereoscopic image shooting apparatus**

(30) Priority: 07.12.2010 JP 2010272181
(71) Applicant: Konica Minolta Opto, Inc., Hachioji-shi, Tokyo 192-8505 (JP)
(72) Inventor: Yamashita, Toshiyuki, Tokyo, 192-8505 (JP)
(74) Representative: HOFFMANN EITLE

(57) **Abstract**

A stereoscopic image shooting apparatus has first and second shooting optical systems, a single image sensing device, a wavelength switcher, and a controller. The shooting optical systems form left-viewpoint and right-viewpoint subject images. The image sensing device has an image sensing surface on which the subject images are formed. The wavelength switcher switches wavelengths of the light incident on the image sensing surface by the controller. By forming the left-viewpoint subject image with light in the specific wavelength range and simultaneously forming the right-viewpoint subject image with light in the wavelength range other than the specific wavelength range, a first image is formed in a first frame. By forming the right-viewpoint subject image with light in the specific wavelength range and simultaneously forming the left-viewpoint subject image with light in the wavelength range other than the specific wavelength range, a second image is formed in a second frame.

## Description

### BACKGROUND OF THE INVENTION

### 1. Field of the Invention

The present invention relates to a stereoscopic image shooting apparatus, and more particularly to a stereoscopic image shooting apparatus of a time-series type which performs stereoscopic shooting of a subject by use of a single image sensing device and two shooting optical systems.

### 2. Description of Related Art

Conventionally, a stereoscopic image shooting apparatus of a time-series type which uses a single image sensing device is so configured as to acquire left and right image data by forming left and right images alternately on the image sensing surface. With this configuration, the left and right images can each be acquired over the entire image sensing surface, and thus a high-quality stereoscopic image can be obtained. However, to permit the left and right images to be formed alternately on the image sensing surface, it is necessary, for example as in the stereoscopic image shooting apparatus disclosed in Patent Document 1 listed below, to transmit and shield the light of left and right light paths alternately with shutters provided in the left and right light paths respectively.
Patent Document 1: JP-A-S62-208789

Using shutters as in the stereoscopic image shooting apparatus of Patent Document 1 increases the technical difficulty involved in synchronization between shooting and the opening and closing of the shutters. That is, since stereoscopy presupposes that the left and right images are subject images that are shot simultaneously, if, between the shooting of the left and right images (that is, during an interval for frame acquisition), camera shake or the like causes the image shooting apparatus to move, the entire screen moves, producing a displacement between the left and right images. As a result, it is impossible to discriminate whether a positional relationship between the left and right images results from parallax or from a movement of the image shooting apparatus. This degrades the precision and image quality of stereoscopic shooting.

### SUMMARY OF THE INVENTION

The present invention has been made against the above background, and aims to provide a stereoscopic image shooting apparatus of a time-series type which, despite having a simple configuration, permits high-precision, high-quality stereoscopic shooting even when the entire apparatus moves during an interval for frame acquisition.

To achieve the above aim, according to the present invention, a stereoscopic image shooting apparatus of a time-series type is provided with: a first shooting optical system for forming a left-viewpoint subject image; a second shooting optical system for forming a right-viewpoint subject image; a single image sensing device having an image sensing surface on which the subject images are formed; an optical path integrator for integrating the optical paths of the first and second shooting optical systems together to form the optical path of light incident on the image sensing surface; a wavelength switcher for switching wavelengths of the light incident on the image sensing surface by switching between a state in which light in a specific wavelength range is passed and a state in which light in a wavelength range other than the specific wavelength range is passed; and a controller for controlling the wavelength switcher such that, by forming the left-viewpoint subject image with light in the specific wavelength range and simultaneously forming the right-viewpoint subject image with light in the wavelength range other than the specific wavelength range, a first image is formed in a first frame, and that, by forming the right-viewpoint subject image with light in the specific wavelength range and simultaneously forming the left-viewpoint subject image with light in the wavelength range other than the specific wavelength range, a second image is formed in a second frame.

### BRIEF DESCRIPTION OF THE DRAWINGS

Fig. 1 is a schematic diagram showing a stereoscopic image shooting apparatus according to Embodiment 1 of the invention;
Fig. 2 is a diagram showing images shot in a first and a second frame in Embodiment 1;
Fig. 3 is a schematic diagram showing a stereoscopic image shooting apparatus according to Embodiment 2 of the invention;
Fig. 4 is a schematic diagram showing an outline of a configuration of a wavelength selecting device used in Embodiment 2;
Fig. 5 is a graph showing polarization-specific transmittance distributions of a polarization rotating device used in Embodiment 2;
Fig. 6 is a block diagram showing an outline of an example of a configuration for image data processing in Embodiment 2;
Fig. 7 is a flow chart of control for image data processing in Embodiment 2;
Fig. 8 is a diagram showing images shot in a first and a second frame in Embodiment 2; and
Figs. 9A to 9H are diagrams illustrating how data of a left and a right image is generated in Embodiment 2.

### DETAILED DESCRIPTION OF PREFERRED EMBODIMENTS

Below, stereoscopic image shooting apparatus etc. embodying the present invention will be described with reference to the accompanying drawings. Among different embodiments and the like, the same parts, or mutually corresponding parts, are identified by the same reference signs, and no overlapping description will be repeated unless necessary.

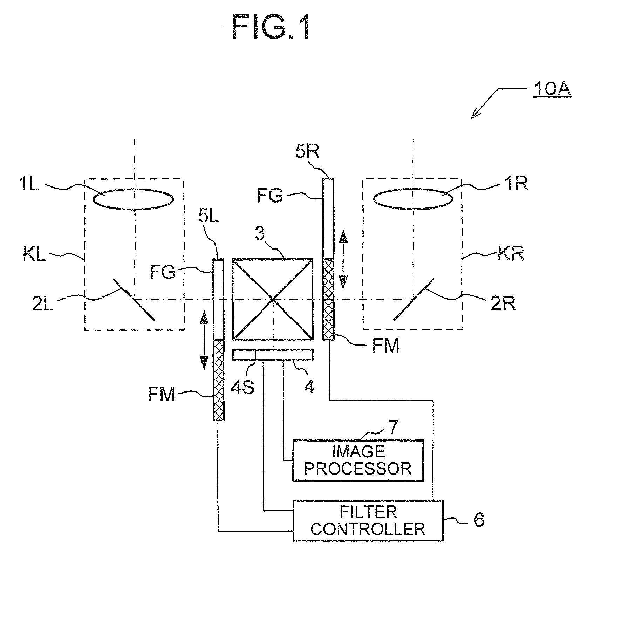

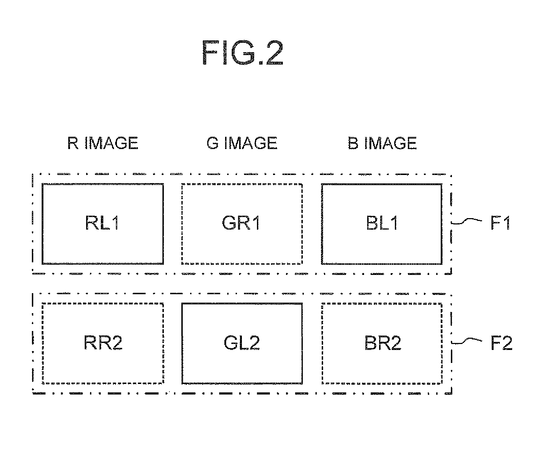

### Embodiment 1 (Figs. 1 and 2)

Fig. 1 shows a stereoscopic image shooting apparatus 10A of a time-series type that performs stereoscopic shooting of a subject, and Fig. 2 shows R (red), G (green), and B (blue), left and right images that are shot in a first and a second frame F1 and F2. The stereoscopic image shooting apparatus 10A is provided with a first and a second shooting optical system KL and KR, a cross prism 3, an image sensing device (for example, a CCD (charge-coupled device)) 4, a first and a second filter 5L and 5R, a filter controller 6, and an image processor 7.

The first shooting optical system KL is composed of a first shooting lens 1L, a first optical path deflecting mirror 2L, etc., and forms a subject image as seen from a left viewpoint. The second shooting optical system KR is composed of a second shooting lens 1R, a second optical path deflecting mirror 2R, etc., and forms a subject image as seen from a right viewpoint. The single image sensing device 4 has an image sensing surface 4S on which the left-viewpoint and right-viewpoint subject images are formed, and has, on the image sensing surface 4S, color filters in a Bayer array. The cross prism 3 has half-mirror surfaces that split light into two parts in terms of amount, and serves as an optical path integrator that integrates the optical paths of the first and second shooting optical systems KL and KR together to produce the optical path of light incident on the image sensing surface 4S.

Between the first and second optical path deflecting mirrors 2L and 2R and the cross prism 3, a first and a second filter 5L and 5R are arranged respectively. The first and second filters 5L and 5R each have a G transmitting filter portion FG that transmits G light and an M transmitting filter portion FM that transmits R and B light (the complementary color of G, that is, magenta M). The G transmitting filter portion FG and the M transmitting filter portion FM are, for example by being slid or rotated like a color wheel, alternately positioned in the optical path, so as to thereby switch the wavelength of the transmitted light. Thus, the first and second filters 5L and 5R serve as a wavelength switcher that switches between a state in which light in the wavelength range of G alone is transmitted and a state in which light in the wavelength ranges of R and B alone is transmitted, so as to thereby switch the wavelength of light incident on the image sensing surface 4S.

Here, the filter controller 6 switches the wavelength of the transmitted light in such a way that the first and second filters 5L and 5R do not transmit light of the same wavelength range simultaneously. That is, the filter controller 6 controls the first and second filters 5L and 5R in such a way that, by forming the left-viewpoint subject image with light in the wavelength ranges of R and B and simultaneously forming the right-viewpoint subject image with light in the wavelength range of G, a first image is formed in the first frame F1 and that, by forming the right-viewpoint subject image with light in the wavelength ranges of R and B and simultaneously forming the left-viewpoint subject image with light in the wavelength range of G, a second image is formed in the second frame F2.

As a result, in the first frame F1, as shown in Fig. 2, an R left image RL1, which is a left-viewpoint subject image, a G right image GR1, which is a right-viewpoint subject image, and a B left image BL1, which is a left-viewpoint subject image, are formed on the image sensing surface 4S. In the second frame F2, as shown in Fig. 2, an R right image RR2, which is a right-viewpoint subject image, a G left image GL2 which is a left-viewpoint subject image, and a B right image BR2. which is a right-viewpoint subject image, are formed on the image sensing surface 4S. Thus, the first image in the first frame F1 is composed of a left image RL1, a right image GR1, and a left image BL1, and the second image in the second frame F2 is composed of a right image RR2, a left image GL2. and a right image BR2.

As described above, by forming a right-viewpoint subject image with light in the specific wavelength range of G and simultaneously forming a left-viewpoint subject image with light in the wavelength ranges of R and B other than the specific wavelength range of G so as to form a first image in the first frame F1, and forming a left-viewpoint subject image with light in the specific wavelength range of G and simultaneously forming a right-viewpoint subject image with light in the wavelength ranges of R and B other than the specific wavelength range of G so as to form a second image in the second frame F2, it is possible to obtain, in each of the first and second frames F1 and F2, a left-viewpoint and a right-viewpoint subject image at the same point of time. A similar result is obtained through the reversed sequence, that is, by forming a left-viewpoint subject image with light in the specific wavelength range of G and simultaneously forming a right-viewpoint subject image with light in the wavelength ranges of R and B other than the specific wavelength range of G so as to form a first image in the first frame F1, and forming a right-viewpoint subject image with light in the specific wavelength range of G and simultaneously forming a left-viewpoint subject image with light in the wavelength ranges of R and B other than the specific wavelength range of G so as to form a second image in the second frame F2.

When the stereoscopic image shooting apparatus 10A moves, an image based on a subject image moves over the entire screen. However, since in each of the first and second frames F1 and F2, a left-viewpoint and a right-viewpoint subject image at the same point of time are obtained as described above, even when the entire apparatus moves during an interval for frame acquisition, it is possible to perform high-precision, high-quality stereoscopic shooting with a simple configuration. Thus, it is possible to prevent an image displacement that may occur during an interval for frame acquisition from causing degradation of the precision and image quality of stereoscopic shooting. To make light use efficiency even between left and right image information on the image sensing surface 4S, it is preferable to let out, as in this embodiment, G light on one side and its complementary color M on the other side. And it is preferable to use, on the image sensing surface 4S, color filters (in a Bayer array or the like) with an area ratio (R : G : B = 1 : 2 : 1) corresponding to the switching between the two states (G and M) achieved with the G transmitting filter portion FG and the M transmitting filter portion FM respectively.

As described above, in each of the first and second frames F1 and F2, a left-viewpoint and a right-viewpoint subject image at the same point of time are obtained. This permits the image processor 7, which serves as a movement amount detector, to detect, based on the displacement between the left-viewpoint subject images in the first and second images, or based on the displacement between the right-viewpoint subject images in the first and second images, the amount of movement δ between the first and second images. The amount of movement δ can be detected from the tendency of luminance in the first and second images. A color image obtained by shooting exhibits a correlation among the luminance distributions of the R, G, and B components of the image. Thus, even when the first and second frames F1 and F2 differ in color, by finding the correlation among luminance distributions (for example, by comparing edge positions), it is possible to detect the amount of movement δ by which the stereoscopic image shooting apparatus 10A has moved between the first and second frames F1 and F2.

For example, in a case where, as shown in Fig. 2, R, G, and B, left and right images are acquired in a first and a second frame F1 and F2, image edges are compared between the R and B left images RL1 and BL1 in the first frame F1 and the G left image GL2 in the second frame F2, and based on the position where their difference is zero, the amount of movement δ is calculated. Or, image edges are compared between the G right image GR1 in the first frame F1 and the R and B right images RR2 and BR2 in the second frame F2, and based on the position where their difference is zero, the amount of movement δ is calculated. In the former case, by correcting the G left image GL2 in the second frame F2 with the amount of movement δ, it is possible to obtain the G left image GL1 in the first frame F1. In the latter case, by correcting the R and B right images RR2 and BR2 in the second frame F2 with the amount of movement δ, it is possible to obtain the R and B right images RR1 and BR1 in the first frame F1. The amount of movement δ may instead be calculated by calculating, by a method of least squares, the position at which the difference in luminance over the entire image is smallest. Although, here, the amount of movement δ is calculated by image processing in the image processor 7, the amount of movement δ may instead be detected by use of a movement amount detection sensor (such as a camera shake detection sensor).

As described above, by exploiting the correlation between color images in different wavelength ranges in the first and second frames F1 and F2, and detecting the amount of movement δ between the first and second images based on the displacement between the left-viewpoint subject images in the first and second images or based on the displacement between the right-viewpoint subject images in the first and second images, it is possible to detect the amount of movement of the entire apparatus resulting from camera shake or the like that may occur during an interval for frame acquisition. Moreover, by using the tendency of luminance in, that is, the correlation of luminance between, the first and second images, it is possible to detect the amount of movement δ between the first and second images easily and accurately.

Next, by using the amount of movement δ detected by the image processor 7, between the first and second images, the left-viewpoint subject images are blended together and the right-viewpoint subject images are blended together, and thereby left and right color images are generated to achieve stereoscopy between the left and right color images (such as the finding of a distance image through corresponding point search). For example, correcting the G left image GL2 in the second frame F2 with the amount of movement δ and thereby generating the G left image GL1 in the first frame F1 makes it possible to generate, from this left image GL1 and the R and B left image RL1 and BL1 in the first frame F1, a color left image. Likewise, correcting the R and B right images RR2 and BR2 in the second frame F2 with the amount of movement δ and thereby generating the R and B right images RR1 and BR1 in the first frame F1 makes it possible to generate, from these right images RR1 and BR1 and the G right image GR1 in the first frame F1, a color right image. With the thus obtained full-color images at the same point of time, it is possible to achieve stereoscopy properly.

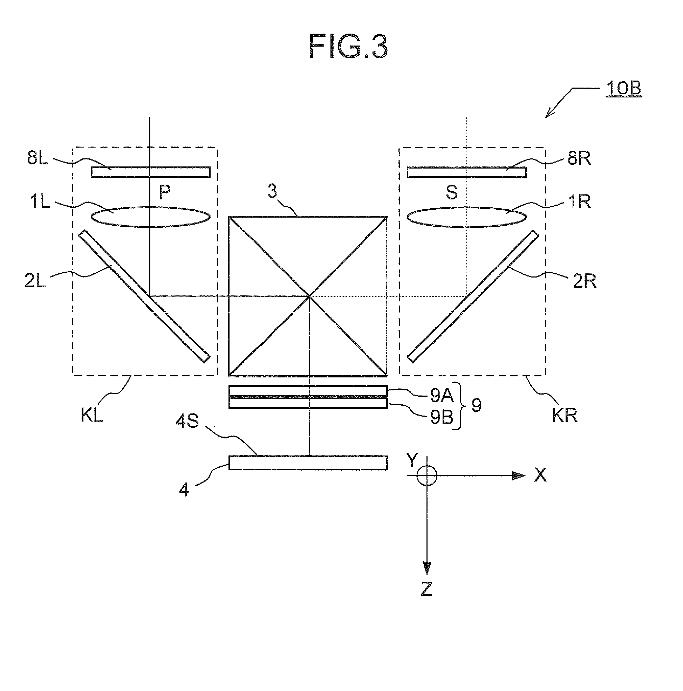

### Embodiment 2 (Figs. 3 to 9)

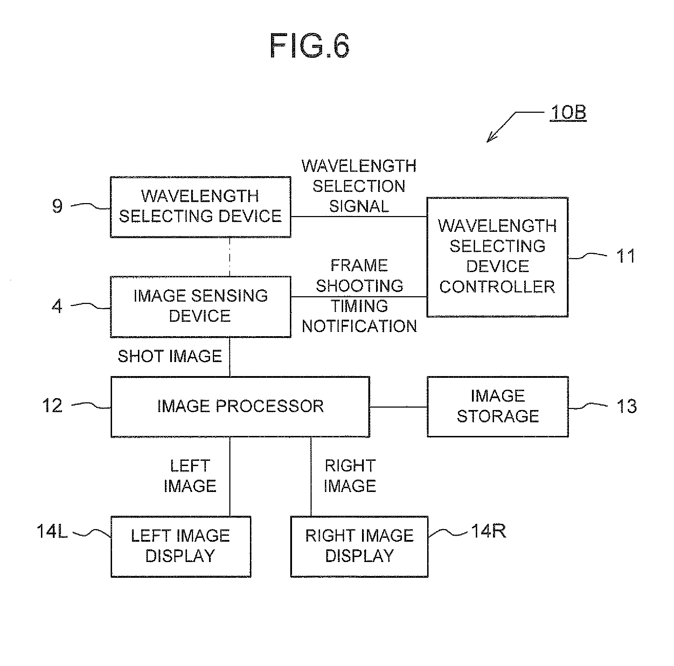

Fig. 3 shows a stereoscopic image shooting apparatus 10B of a time-series type which performs stereoscopic shooting of a subject, and Fig. 6 shows an outline of an example of a configuration for image data processing in the stereoscopic image shooting apparatus 10B. The stereoscopic image shooting apparatus 10B is provided with a first and a second shooting optical systems KL and KR, a cross prism 3, an image sensing device (for example, a CCD) 4, a wavelength selecting device 9, a wavelength selecting device controller 11, an image processor 12, an image storage 13, a left image display 14L, and a right image display 14R.

The first shooting optical system KL is composed of a first polarizing plate 8L, a first shooting lens 1L, a first optical path deflecting mirror 2L, etc., and forms a subject image as seen from a left viewpoint. The second shooting optical system KR is composed of a second polarizing plate 8R, a second shooting lens 1R, a second optical path deflecting mirror 2R, etc., and forms a subject image as seen from a right viewpoint. The first polarizing plate 8L is so arranged as to pass light polarized parallel to the X axis alone, and the second polarizing plate 8R is so arranged as to pass light polarized parallel to the Y axis alone. The single image sensing device 4 has an image sensing surface 4S on which the left-viewpoint and right-viewpoint subject images are formed, and has, on the image sensing surface 4S, color filters in a Bayer array. The cross prism 3 has half-mirror surfaces that split light into two parts in terms of amount, and serves as an optical path integrator that integrates the optical paths of the first and second shooting optical systems KL and KR together to produce the optical path of light incident on the image sensing surface 4S.

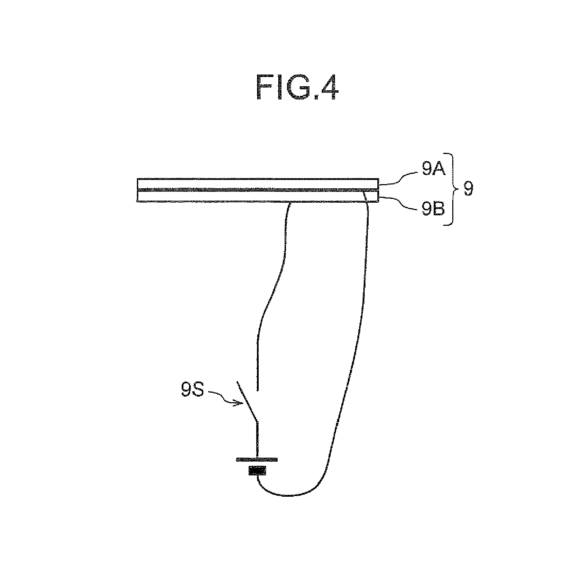

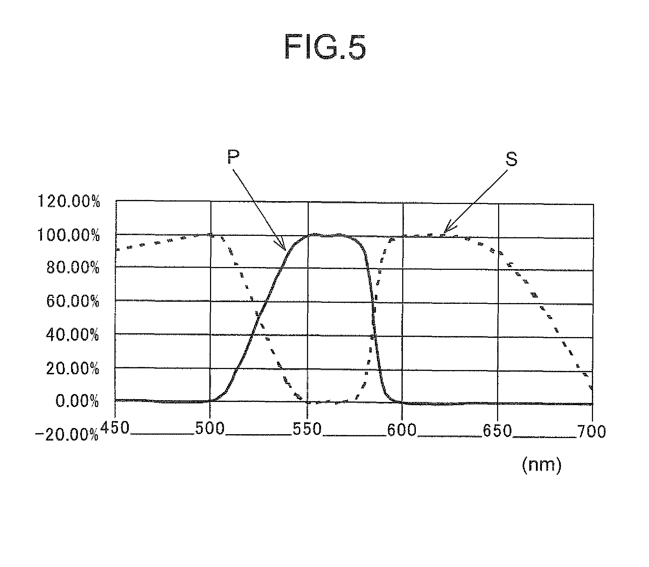

Between the cross prism 3 and the image sensing device 4, the wavelength selecting device 9 is arranged. The wavelength selecting device 9 is composed of a polarization rotating device 9A of a wavelength-selective type and a liquid crystal device 9B. Fig. 4 shows an outline of a structure of the wavelength selecting device 9, and Fig. 5 shows polarization-specific transmittance distributions of the polarization rotating device 9A. The graph in Fig. 5 shows the light amount ratio (%) of P- and S-polarized light that is output when S-polarized light alone is input. As shown in the graph in Fig. 5, the polarization rotating device 9A is a device that rotates the polarization of light in a specific wavelength range alone, and the liquid crystal device 9B selects and transmits either P- or S-polarized light according to the voltage applied by turning a polarization selecting switch 9S (Fig. 4). Thus, the wavelength selecting device 9 serves as a wavelength switcher that switches between a state in which light in the wavelength range of G alone is transmitted and a state in which light in the wavelength ranges of R and B alone is transmitted, so as to thereby switch the wavelength of light incident on the image sensing surface 4S. Using the wavelength selecting device 9 helps reduce the lowering of light amount as results from the use of a filter, and thus helps enhance light use efficiency.

Here, consider the second shooting optical system KR which transmits 8-polarized light alone. Of the S-polarized light emerging from the second shooting optical system KR, only the part in the wavelength range of G (covering wavelengths of 500 nm to 600 nm) has its polarization direction rotated by 90 degrees by the polarization rotating device 9A in the wavelength selecting device 9 to become P-polarized light (Fig. 5). Of the resulting light, differently polarized in different wavelength ranges, either light in the wavelength range of G alone reaches the image sensing device 4 or light in the wavelength ranges of R and B alone reaches the image sensing device 4 according to whether the liquid crystal device 9B is on or off. A similar discussion applies to the other, namely the first, shooting optical system KL; the P-polarized light emerging from it has a polarization direction that is rotated 90° relative to S-polarized light, and from this it is understood that the correspondence in polarization directions and wavelength ranges is reversed relative to that described just above. Accordingly, the relationship between the P-polarized light and the S-polarized light, and between the light in the wavelength range of G and the light in the wavelength ranges of R and B other than G, that emerge from the first and second shooting optical systems KL and KR respectively is such that the light in the wavelength range of G emerging from one of the first and second shooting optical systems KL and KR and the light in the wavelength ranges of R and B emerging from the other of them simultaneously reach, and form images on, the image sensing surface 4S.

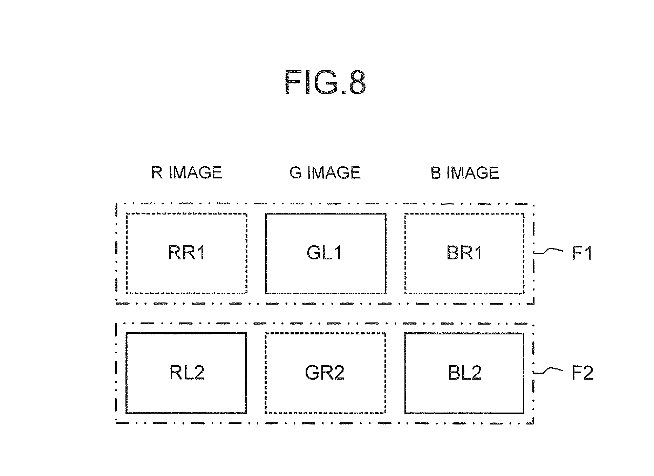

Fig. 8 shows the R, G, and B, left and right images that are shot in a first and a second frame F1 and F2. For example, the wavelength selecting device controller 11 controls the wavelength selecting device 9 in such a way that, by forming a right-viewpoint subject image with light in the wavelength ranges of R and B and simultaneously forming a left-viewpoint subject image with light in the wavelength range of G, a first image is formed in the first frame F1, and that, by forming a left-viewpoint subject image with light in the wavelength ranges of R and B and simultaneously forming a right-viewpoint subject image with light in the wavelength range of G, a second image is formed in the second frame F2.

As a result, in the first frame F1, as shown in Fig. 8, an R right image RR1, which is a right-viewpoint subject image, a G left image GL1, which is a left-viewpoint subject image, and a B right image BR1, which is a right-viewpoint subject image, are formed on the image sensing surface 4S. In the second frame F2, as shown in Fig. 8, an R left image RL2, which is a left-viewpoint subject image, a G right image GR2, which is a right-viewpoint subject image, and a B left image BL2, which is a left-viewpoint subject image, are formed on the image sensing surface 4S. Thus, the first image in the first frame F1 is composed of a right image RR1, a left image GL1, and a right image BR1, and the second image in the second frame F2 is composed of a left image RL2, a right image GR2, and a left image BL2.

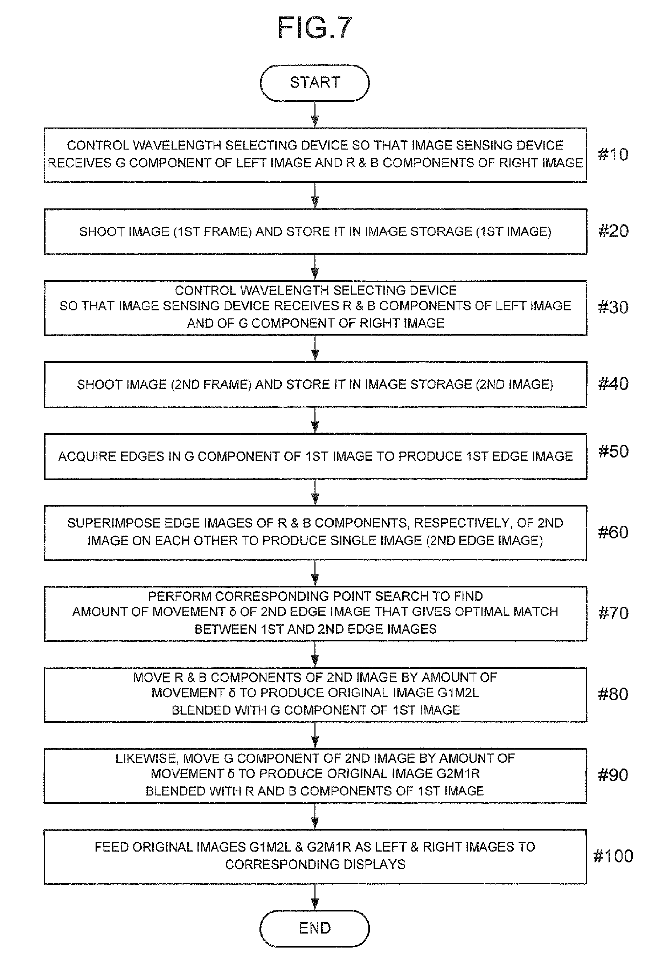

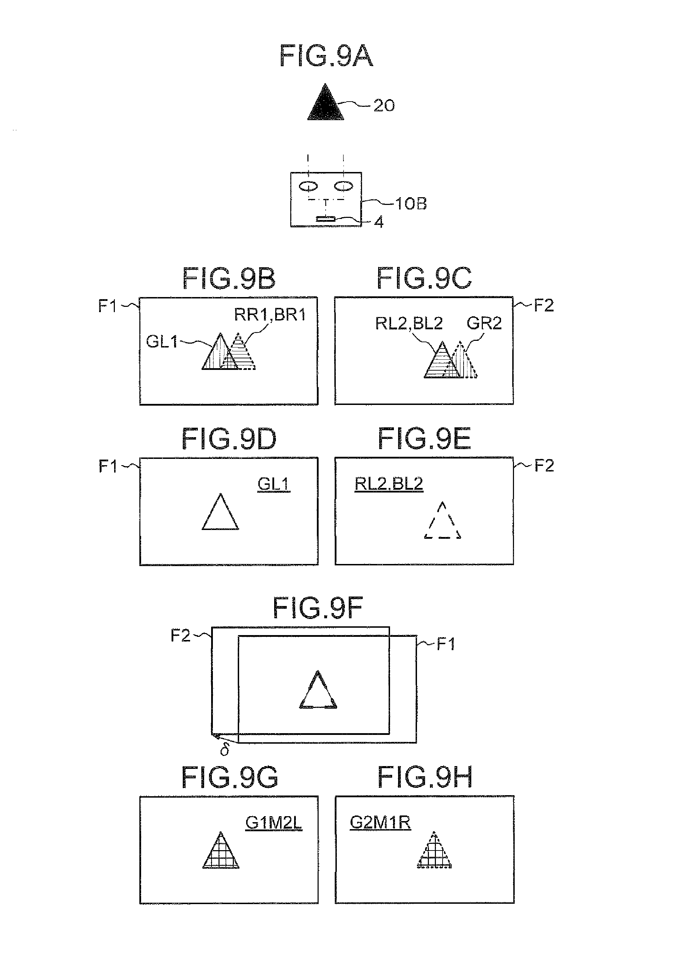

Fig. 7 shows a flow of control for image data processing, and Figs. 9A to 9H schematically show how left and right image data is generated. When the stereoscopic shooting of a subject 20 is started (Fig. 9A), and a notification of the timing of frame shooting is sent from the image sensing device 4 to the wavelength selecting device controller 11 (Fig. 6), the wavelength selecting device controller 11 controls the wavelength selecting device 9 by means of a wavelength selection signal such that the G component of the left image and the R and B components of the right image reach the image sensing surface 4S (Fig. 7, #10). As shown in Fig. 9B, a first image composed of a right image RR1, a left image GL1, and a right image BR1 is shot in the first frame F1, and is stored from the image processor 12 to the image storage 13 (Fig. 7, #20). Next, the wavelength selecting device controller 11 controls the wavelength selecting device 9 by means of a wavelength selection signal such that the R and B components of the left image and the G component of the right image reach the image sensing surface 4S (Fig. 7, #30). Then, as shown in Fig. 9C, a second image composed of a left image RL2, a right image GR2, and a left image BL2 is shot in the second frame F2, and is stored from the image processor 12 to the image storage 13 (Fig. 7, #40).

As described above, by forming a left-viewpoint subject image with light in the specific wavelength range of G and simultaneously forming a right-viewpoint subject image with light in the wavelength ranges of R and B other than the specific wavelength range of G so as to form a first image in the first frame F1, and by forming a right-viewpoint subject image with light in the specific wavelength range of G and simultaneously forming a left-viewpoint subject image with light in the wavelength ranges of R and B other than the specific wavelength range of G so as to form a second image in the second frame F2, it is possible to obtain, in each of the first and second frames F1 and F2, a left-viewpoint and a right-viewpoint subject image at the same point of time. A similar result is obtained through the reversed sequence, that is, by forming a right-viewpoint subject image with light in the specific wavelength range of G and simultaneously forming a left-viewpoint subject image with light in the wavelength ranges of R and B other than the specific wavelength range of G so as to form a first image in the first frame F1, and forming a left-viewpoint subject image with light in the specific wavelength range of G and simultaneously forming a right-viewpoint subject image with light in the wavelength ranges of R and B other than the specific wavelength range of G so as to form a second image in the second frame F2.

When the stereoscopic image shooting apparatus 10B moves, an image based on a subject image moves over the entire screen. However, since in each of the first and second frames F1 and F2, a left-viewpoint and a right-viewpoint subject image at the same point of time are obtained as described above, even when the entire apparatus moves during an interval for frame acquisition, it is possible to perform high-precision, high-quality stereoscopic shooting with a simple configuration. Thus, it is possible to prevent an image displacement that may occur during an interval for frame acquisition from causing degradation of the precision and image quality of stereoscopic shooting. To make light use efficiency even between left and right image information on the image sensing surface 4S, it is preferable to let out, as in this embodiment, G light on one side and its complementary color M on the other side. And it is preferable to use, on the image sensing surface 4S, color filters (in a Bayer array or the like) with an area ratio (R : G : B = 1 : 2 : 1) corresponding to the switching between the two states (G and M) of the wavelength selecting device 9.

G-component edges are acquired from the left image GL1 of the first image to produce, as shown in Fig. 9D, a first edge image (Fig. 7, #50). R- and B-component edges are acquired from the left images RL2 and BL2 of the second image, and, as shown in Fig. 9E, their respective edge images are superimposed on each other to produce a second edge image (Fig. 7, #60). Next, by corresponding point search, the amount of movement δ of the second edge image that gives the optimal match between the first and second edge images is found (Fig. 7, #70). The amount of movement δ between the first and second frames as obtained when the first and second edge images match equals, as will be understood from Fig. 9F, the amount of movement of the entire screen resulting from a movement of the stereoscopic image shooting apparatus 10B between the first and second frames F1 and F2.

In each of the first and second frames F1 and F2, a left-viewpoint and a right-viewpoint subject images at the same point of time are obtained. This permits, as described above, the image processor 12, which serves as a movement amount detector, to detect the amount of movement δ between the first and second images based on the displacement between the left-viewpoint subject images in the first and second images (or the displacement between the right-viewpoint subject images in the first and second images). The amount of movement δ can be detected from the tendency of luminance in the first and second images. A color image obtained by shooting exhibits a correlation among the luminance distributions of the R, G, and B components of the image. Thus, even when the first and second frames F1 and F2 differ in color, by finding the correlation among luminance distributions (in this embodiment, by comparing edge positions), it is possible to detect the amount of movement δ by which the stereoscopic image shooting apparatus 10B has moved between the first and second frames F1 and F2.

For example, in a case where, as shown in Fig. 8, R, G, and B, left and right images are acquired in a first and a second frame F1 and F2, image edges are compared between the G left image GL1 in the first frame F1 and the R and B left images RL2 and BL2 in the second frame F2, and based on the position where their difference is zero, the amount of movement δ is calculated. Or, image edges are compared between the R and B right images RR1 and BR1 in the first frame F1 and the G right image GR2 in the second frame F2, and based on the position where their difference is zero, the amount of movement δ is calculated. In the former case, by correcting the R and B left images RL2 and BL2 in the second frame F2 with the amount of movement δ, it is possible to obtain the R and B left images RL1 and BL1 in the first frame F1. In the latter case, by correcting the G right image GR2 in the second frame F2 with the amount of movement δ, it is possible to obtain the G right images GR1 in the first frame F1. The amount of movement δ may instead be calculated by calculating, by a method of least squares, the position at which the difference in luminance over the entire image is smallest. Although, here, the amount of movement δ is calculated by image processing in the image processor 12, the amount of movement δ may instead be detected by use of a movement amount detection sensor (such as a camera shake detection sensor).

As described above, by exploiting the correlation between color images in different wavelength ranges in the first and second frames F1 and F2, and detecting the amount of movement δ between the first and second images based on the displacement between the left-viewpoint subject images in the first and second images or based on the displacement between the right-viewpoint subject images in the first and second images, it is possible to detect the amount of movement of the entire apparatus resulting from camera shake or the like that may occur during an interval for frame acquisition. Moreover, by using the tendency of luminance in, that is, the correlation of luminance between, the first and second images, it is possible to detect the amount of movement δ between the first and second images easily and accurately.

The left images RL2 and BL2 (Fig. 8), which are the R and B components of the second image, are moved by the amount of movement δ and is blended with the left image GL1 (Fig. 8), which is the G component of the first image, to produce an original image G1M2L as shown in Fig. 9G (Fig. 7, #80). Likewise, the right image GR2 (Fig. 8), which is the G component of the second image, is moved by the amount of movement δ, and is blended with the right images RR1 and BR1 (Fig. 8), which are the R and B components of the first image, to produce an original image G2M1R as shown in Fig. 9H (Fig. 7, #90). The image processor 12 (Fig. 6) feeds the original image G1M2L, as a left image, to the left image display 14L, and feeds the original image G2M1R, as a right image, to the right image display 14R (Fig. 7, #100). This ends the flow.

As described above, by using the amount of movement δ detected by the image processor 12, between the first and second images, the left-viewpoint subject images are blended together and the right-viewpoint subject images are blended together, and thereby left and right color images are generated to achieve stereoscopy between the left and right color images (such as the finding of a distance image through corresponding point search). For example, correcting the R and B left image RL2 and BL2 in the second frame F2 with the amount of movement δ and thereby generating the R and B left images RL1 and BL1 in the first frame F1 makes it possible to generate, from these left images RL1 and BL1 and the G left image GL1 in the first frame F1, a color right image. Likewise, correcting the G right image GR2 in the second frame F2 with the amount of movement δ and thereby generating the G right image GR1 in the first frame F1 makes it possible to generate, from this right image GR1 and the R and B right images RR1 and BR1 in the first frame F1, a color left image. With the thus obtained full-color images at the same point of time, it is possible to achieve stereoscopy properly.

### Features etc. of Different Embodiments of the Invention

As will be understood from the foregoing, embodiments of the invention encompass stereoscopic image shooting apparatus having the following configurations (α1) to (α4).

(α1): A stereoscopic image shooting apparatus of a time-series type, including a first shooting optical system for forming a left-viewpoint subject image, a second shooting optical system for forming a right-viewpoint subject image, and a single image sensing device having an image sensing surface on which the subject images are formed, is characterized by the provision of: an optical path integrator for integrating the optical paths of the first and second shooting optical systems together to form the optical path of light incident on the image sensing surface; a wavelength switcher for switching wavelengths of the light incident on the image sensing surface by switching between a state in which light in a specific wavelength range is passed and a state in which light in a wavelength range other than the specific wavelength range is passed; and a controller for controlling the wavelength switcher such that, by forming the left-viewpoint subject image with light in the specific wavelength range and simultaneously forming the right-viewpoint subject image with light in the wavelength range other than the specific wavelength range, a first image is formed in a first frame, and that, by forming the right-viewpoint subject image with light in the specific wavelength range and simultaneously forming the left-viewpoint subject image with light in the wavelength range other than the specific wavelength range, a second image is formed in a second frames.

(α2): The stereoscopic image shooting apparatus having the configuration (α1) above is further characterized by the provision of a movement amount detector for detecting the amount of movement between the first and second images based on the displacement between the left-viewpoint subject images in the first and second images or based on the displacement between the right-viewpoint subject images in the first and second images.

(α3): The stereoscopic image shooting apparatus having the configuration (α2) above is further characterized in that the movement amount detector detects the amount of movement based on the tendency of luminance between the first and second images.

(α4): The stereoscopic image shooting apparatus having the configuration (α2) or (α3) above is further characterized in that, by use of the amount of movement detected by the movement amount detector, the left-viewpoint subject images in the first and second images are blended together and the right-viewpoint subject images in the first and second images are blended together, and thereby left and right color images are generated to achieve stereoscopy between the left and right color images.

According to the configuration (α1), by forming a left-viewpoint subject image with light in a specific wavelength range and simultaneously forming a right-viewpoint subject image with light in a wavelength range other than the specific wavelength range, a first image is formed in the first frame, and by forming a right-viewpoint subject image with light in a specific wavelength range and simultaneously forming a left-viewpoint subject image with light in a wavelength range other than the specific wavelength range, a second image is formed in the second frame. It is thus possible to obtain, in each of the first and second frames, a left-viewpoint and a right-viewpoint subject image at the same point of time. Thus, even when the entire apparatus moves during an interval for frame acquisition, it is possible to perform high-precision, high-quality stereoscopic shooting with a simple configuration.

According to the configuration (α2), the correlation between color images in different wavelength ranges between the first and second frames is exploited, and based on the displacement between the left-viewpoint subject images in the first and second images or based on the displacement between the right-viewpoint subject images in the first and second images, the amount of movement between the first and second images is detected. It is thus possible to detect the amount of movement of the entire apparatus resulting from camera shake or the like that may occur during an interval for frame acquisition.

According to the configuration (α3), the tendency of luminance, that is, the correlation of luminance (for example, by comparing edge positions), between the first and second images is used. It is thus possible to detect the amount of movement between the first and second images easily and accurately.

According to the configuration (α4), by use of the detected amount of movement, by blending together the left-viewpoint subject images in the first and second images and blending together the right-viewpoint subject images in the first and second images, a left and a right color image are generated to achieve stereoscopy between the left and right color images. It is thus possible to obtain full-color images at the same point of time and achieve stereoscopy properly.

## Claims

1. A stereoscopic image shooting apparatus of a time-series type, including a first shooting optical system for forming a left-viewpoint subject image, a second shooting optical system for forming a right-viewpoint subject image, and a single image sensing device having an image sensing surface on which the subject images are formed, the stereoscopic image shooting apparatus comprising:
an optical path integrator for integrating optical paths of the first and second shooting optical systems together to form an optical path of light incident on the image sensing surface;
a wavelength switcher for switching wavelengths of the light incident on the image sensing surface by switching between a state in which light in a specific wavelength range is passed and a state in which light in a wavelength range other than the specific wavelength range is passed; and
a controller for controlling the wavelength switcher such that, by forming the left-viewpoint subject image with light in the specific wavelength range and simultaneously forming the right-viewpoint subject image with light in the wavelength range other than the specific wavelength range, a first image is formed in a first frame, and that, by forming the right-viewpoint subject image with light in the specific wavelength range and simultaneously forming the left-viewpoint subject image with light in the wavelength range other than the specific wavelength range, a second image is formed in a second frame.

2. The stereoscopic image shooting apparatus according to claim 1, further comprising a movement amount detector for detecting an amount of movement between the first and second images based on a displacement between the left-viewpoint subject images in the first and second images or based on a displacement between the right-viewpoint subject images in the first and second images.

3. The stereoscopic image shooting apparatus according to claim 2, wherein the movement amount detector detects the amount of movement based on tendency of luminance between the first and second images.

4. The stereoscopic image shooting apparatus according to claim 2 or 3, wherein, by use of the amount of movement detected by the movement amount detector, the left-viewpoint subject images in the first and second images are blended together and the right-viewpoint subject images in the first and second images are blended together, and thereby left and right color images are generated to achieve stereoscopy between the left and right color images.
